# EUROPÄISCHE PATENTSCHRIFT

(11) **EP 1 984 618 B1**
(45) Veröffentlichungstag und Bekanntmachung des Hinweises auf die Patenterteilung: **22.02.2012**
(21) Anmeldenummer: 07721891.5
(22) Anmeldetag: 05.02.2007
(51) Int. Cl.: F02M 37/22, B01D 35/143

(54) **FLUIDFILTER, MIT GESCHÜTZTEM FLÜSSIGKEITSSENSOR**
FLUID FILTER COMPRISING A PROTECTED LIQUID SENSOR
FILTRE POUR FLUIDE ÉQUIPÉ D'UN DÉTECTEUR DE LIQUIDE PROTÉGÉ

(30) Priorität: 06.02.2006 DE 202006001950 U
(43) Veröffentlichungstag der Anmeldung: 29.10.2008
(73) Patentinhaber: Hengst GmbH & Co. KG, 48147 Münster (DE)
(72) Erfinder: EBERLE, Richard, 48161 Münster (DE); KUBSCH, Burkhard, 48612 Horstmar (DE)
(74) Vertreter: Habbel, Ludwig
(86) Internationale Anmeldenummer: PCT/DE2007/000222
(87) Internationale Veröffentlichungsnummer: WO 2007/090379

(56) Entgegenhaltungen:
- EP-A- 1 188 468
- EP-A- 1 400 271
- EP-A1- 0 367 868
- EP-A2- 0 738 528
- EP-A2- 1 277 948
- FR-A1- 2 601 600
- GB-A- 2 038 655
- JP-U- 2 052 958

## Beschreibung

Die Erfindung betrifft einen Fluidfilter mit einem Sammelraum für eine aus dem Fluid abgeschiedene Flüssigkeit, sowie mit einem Filtereinsatz, der ein für das Fluid durchlässiges Filtermedium aufweist und oberhalb des Sammelraums vorgesehen ist, und weiterhin mit einem Flüssigkeitssensor, der oberhalb der tiefsten Stelle des Sammelraums angeordnet ist, wobei der Flüssigkeitssensor zumindest bereichsweise mittels wenigstens einer Schutzwand gegenüber der Flüssigkeit abgeschirmt ist.

Ein solcher Fluidfilter ist aus der EP 1 277 948 A2 bekannt. Er ist als Kraftstofffilter für Verbrennungskraftmaschinen, insbesondere als Dieselkraftstofffilter für Fahrzeugmotoren vorgesehen. Das zu filternde Fluid ist dabei der Kraftstoff, und die in den Sammelraum abzuscheidende Flüssigkeit ist Wasser. Beispielsweise aufgrund einer Kondenswasserbildung, die im Kraftstofftank erfolgt ist, kann Wasser in den Kraftstoff gelangen.

Bei solchen Fluidfiltern kann, wie dies aus der Praxis bekannt ist, das Filtermedium hydrophobiert bzw. auf andere Weise für Wasser undurchlässig ausgestaltet, so dass der Filtereinsatz nicht nur zur Reinigung des Kraftstoffs von Verunreinigungen dient, sondern auch als Wasserabscheider. Die vom Filtereinsatz abgeschiedene Flüssigkeit, also Wasser, sammelt sich unterhalb des Filtereinsatzes in einem Sammelraum.

Erstens ist der Filter selbst vor einer zu großen angesammelten Wassermenge zu schützen: beispielsweise wenn der Filtereinsatz dauernd im Wasser stünde, könnte das Filtermedium, beispielsweise ein Papierfiltermedium, geschädigt werden; zudem würde die für die Filtrierung des Kraftstoffs verfügbare Filterfläche bei einem zu hohen Flüssigkeitsstand des Wassers reduziert. Zweitens können sich Schädigungen der Verbrennungskraftmaschine bzw. der Kraftstoffeinspritzanlage ergeben, wenn bei einem zu hohen Wasserstand im Sammelraum des Fluidfilters Wasser zu einem unzulässig hohen Anteil mit dem Kraftstoff gefördert wird.

Aus diesem Grund ist es bekannt, einen Flüssigkeitssensor, nämlich einen Wassersensor in dem Sammelraum des Kraftstofffilters vorzusehen. Das Wasser weist ein höheres spezifisches Gewicht auf als der Kraftstoff. Es sammelt sich also unterhalb des Kraftstoffs bzw. verdrängt den Kraftstoff, der sich unten in dem Sammelraum befindet. Weitere Mengen von Wasser, welches in den Sammelraum gelangt, lassen den Wasserspiegel im Sammelraum ansteigen.

Sobald das Wasser einen zu hohen Flüssigkeitsstand im Sammelraum erreicht, erfolgt z. B. eine Alarmierung, beispielsweise des Motorenbetreibers bzw. Fahrzeugführers. Alternativ dazu oder ergänzend kann automatisch mittels der Motorsteuerung eine Schutzmaßnahme für die Verbrennungskraftmaschine eingeleitet werden, beispielsweise eine Umschaltung auf ein Notlaufprogramm, wie mit reduzierter Kraftstoffförderung, wobei sich als für den Fahrzeugführer wahrnehmbarer Nebeneffekt die verfügbare Motorleistung deutlich reduziert.

In der Praxis ist nicht auszuschließen, dass der Flüssigkeitsspiegel im Sammelraum nicht nur insgesamt ansteigt, sondern durch Fliehkräfte bei Kurvenfahrt oder durch Stöße aufgrund von Fahrbahnunebenheiten unabhängig vom Füllvolumen des Sammelraums bereichsweise Schwankungen unterliegt, indem die Flüssigkeit im Sammelraum hin und her schwappt. Infolgedessen kann die Flüssigkeit mit dem Flüssigkeitssensor in Kontakt kommen, bevor die eigentlich als kritisch angesehene Flüssigkeitsmenge im Sammelraum vorliegt. Der Flüssigkeitssensor gibt daher in einer derartigen Situation ein Füllstandssignal ab, welches im Rahmen des vorliegenden Vorschlags als Fehlinformation oder als Fehlsignalisierung bezeichnet wird, da der registrierte Kontakt des Flüssigkeitssensors mit der Flüssigkeit nicht dem wirklichen Flüssigkeitsstand innerhalb des Sammelraums entspricht.

Bei dem genannten Kraftstofffilter ist der Flüssigkeitssensor von zwei konzentrischen Bauteilen umgeben: erstens von einem inneren hutförmigen Schließkörper, der an seinem oberen Ende einen kragenartigen Ringflansch ausbildet, in seiner umlaufenden Wandung mehrere Fenster aufweist, und der mit seiner unteren Stirnfläche abdichtend auf einer Flachdichtung aufliegt. Zweitens von einem äußeren Ventilgehäuse, in dem der höhenbewegliche Schließkörper geführt ist.

Wenn der Flüssigkeitssensor ausgebaut wird, wird der Schließkörper federkraftunterstützt angehoben, so dass an der Flachdichtung vorbei Wasser aus dem Sammelraum abfließen und so der Sammelraum geleert werden kann.

Der dem Wassersensor nähere, radial innere Schließkörper ist nicht als Schutzwand gegen schwankende Flüssigkeitsspiegel bei schwappendem Wasser vorgesehen, sondern vielmehr Teil eines Verschlusses bzw. Ventils, welches automatisch öffnet, wenn der Wassersensor entfernt wird, so dass nun automatisch Wasser aus dem Sammelraum durch das geöffnete Ventil abfließen kann. Wie die EP 1 277 948 A2 ausdrücklich erwähnt, sind im Schließkörper mehrere Fenster vorgesehen, die ausdrücklich den freien Durchfluss von Wasser ermöglichen sollen. Auch da sie am Umfang des Schließkörpers ausdrücklich gleichmäßig verteilt angeordnet sein sollen, ist eine Behinderung der Wasserströmung nicht vorgesehen bzw. gar nicht möglich.

Auch das dem Wassersensor fernere, radial äußere Ventilgehäuse ist nicht als Schutzwand gegen schwankende Flüssigkeitsspiegel bei schwappendem Wasser vorgesehen, sondern dient zur Führung des höhenbeweglichen Schließkörpers und weist Führungsrippen auf, denen die erwähnte Druckfeder anliegt. Auch das Ventilgehäuse weist ausdrücklich längs des Umfangs gleichmäßig verteilt eine Vielzahl von Fenstern auf, so dass ausdrücklich ein ungehindertes Durchströmen von Wasser möglich ist.

Dass die Fenster, also die Durchbrüche in dem Schließkörper und dem Ventilgehäuse versetzt zueinander angeordnet sein sollen und eine mehrfache Richtungsänderung des durch diese Verbindung in radialer Hauptrichung zu dem Flüssigkeitssensor strömenden Wassers bewirken, geht aus der EP 1 277 948 A2 nicht hervor. Vielmehr lehrt die EP 1 277 948 A2 eine Integration von einem Wassersensor in ein Wasserablauf-Ventil. Um die Funktionsfähigkeit des Wassersensors sicherzustellen, wird darauf Wert gelegt, dass er für im Sammelraum befindliches Wasser gut zugänglich ist, damit er bei entsprechenden Wasserstand ansprechen kann.

Wie die EP 1 277 948 A2 ausdrücklich erwähnt, wird bei ausgebautem Wassersensor durch die entstandene Öffnung ermöglicht, dass Luft von außen in das Gehäuse einströmen und das Wasser ungehindert abfließen kann. Allerdings ist aus der EP 1 277 948 A2 nicht erkennbar, wie bei eingebautem Flüssigkeitssensor Wasser, welches durch die Fenster in den Innenraum des hutförmigen Schließkörpers eindringt, bis an den Wassersensor gelangen könnte, um dort die Sensorkontakte zu benetzen und so die gewünschte Alarmierung auszulösen. Der vom hutförmigen Schließkörper umgebene Innenraum ist nämlich nach oben hin geschlossen und weist nur unterhalb der Sensorkontakte die erwähnten Fenster auf. Eindringendes Wasser kann zwar den Kraftstoff verdrängen, welcher sich auf Höhe der Fenster in diesem Innenraum befindet. Ein weiteres Ansteigen des Wasserspiegels im Innenraum des Schließkörpers ist jedoch nicht möglich, da der Kraftstoff kein kompressibles Medium darstellt, jedenfalls bei den praxisüblichen Drücken von etwa 8 bar, die in einem Kraftstofffilter herrschen, nicht nennenswert komprimierbar ist.

Der Erfindung liegt die Aufgabe zugrunde, einen Fluidfilter vorzuschlagen, dass dieser einen möglichst störungsfreien Betrieb einer mit dem Fluidfilter zusammenwirkenden Verbrennungskraftmaschine ermöglicht und Fehlinformationen des Flüssigkeitssensors vermeidet. Weiterhin ist es Aufgabe der Erfindung, einen für einen derartigen Fluidfilter geeigneten Filtereinsatz anzugeben.

Diese Aufgabe wird durch einen Fluidfilter mit den Merkmalen des Anspruchs 1 und durch einen Filtereinsatz nach Anspruch 9 gelöst.

Die Erfindung schlägt mit anderen Worten vor, den Flüssigkeitssensor gegen im Sammelraum umherschwappende Flüssigkeit mittels einer Schutzwand zu schützen, also quasi zu kapseln. Diese Kapselung ist vorschlagsgemäß nicht vollständig: um die Funktionsfähigkeit des Flüssigkeitssensors sicherzustellen, besteht eine flüssigkeitsdurchlässige Verbindung, und zwar nicht in vertikaler Richtung, sondern in radialer Richtung, vom Flüssigkeitssensor nach außen zu dem Sammelraum, der die Schutzwand umgibt, so dass Flüssigkeit, die in hauptsächlich radialer Richtung strömt, diese flüssigkeitsdurchlässige Verbindung durchströmen kann.

Vorschlagsgemäß sind wenigstens zwei Schutzwände vorgesehen, die jeweils kleine, nämlich loch- oder schlitzartig ausgestaltete Durchbrüche aufweisen und einen labyrinthartigen Verlauf der flüssigkeitsdurchlässigen Verbindung und somit eine Labyrinthführung des Wassers bewirken, da die Durchbrüche in den wenigstens zwei Schutzwänden versetzt zueinander angeordnet sind. Auf diese Weise wird ein besonders zuverlässiger Schutz vor Fehlsignalisierungen des Flüssigkeitssensors ermöglicht, da die äußere Schutzwand den Druck der anschwappenden Flüssigkeit abfängt und lediglich Flüssigkeit, die durch die Durchbrüche dieser äußeren Schutzwand gelangt ist, vergleichsweise druckarm gegen die innere Schutzwand gerät. Bei kurzfristigen Wellenbewegungen der Flüssigkeit ist die Wahrscheinlichkeit gering, dass die Flüssigkeit bis zu dem Flüssigkeitssensor gelangt.

Schnelle Bewegungen des Wasserspiegels, wie sie bei schwappendem Wasser auftreten, werden somit gedämpft und treten im Innenraum der Innersten Schutzwand praktisch nicht auf. Im Vergleich zu den schnellen Bewegungen des Flüssigkeitsspiegels, wie sie bei schneller Kurvenfahrt aufgrund von Fliehkräften oder bei Fahrbahnunebenheiten aufgrund von Stößen auf die Flüssigkeit einwirken, verändert sich der Flüssigkeitsspiegel aufgrund der zunehmenden abgeschiedenen Flüssigkeitsmenge im Filter vergleichsweise langsam.

Die schwerere Flüssigkeit, beispielsweise Wasser in einem Kraftstofffilter, kann durch die erwähnte Verbindung in den von der inneren Schutzwand umgebenen Innenraum gelangen. Dabei kann ähnlich einem Entlüftungseffekt die leichtere Flüssigkeit durch die Durchbrüche in den Schutzwänden entweichen, und da diese Durchbrüche wenigstens auf Höhe des Flüssigkeitssensors angeordnet sind, kann die schwerere Flüssigkeit problemlos bis zu dem Flüssigkeitssensor in dem erwähnten Innenraum ansteigen.

Wenn die störenden Einflüsse, beispielsweise ein Ansprechen des Flüssigkeitssensors bei noch nicht ausreichend hohem, kritischem Flüssigkeitsstand, aufgrund einer bestimmten, bekannten Geometrie im Innenraum des Fluidfilters aus einer bestimmten Richtung erfolgen, kann es ausreichend sein, die Schutzwand lediglich teilweise neben und/oder unter dem Flüssigkeitssensor anzuordnen, beispielsweise im Halbkreis um den Flüssigkeitssensor herum anzuordnen.

Eine besonders zuverlässige abschirmende und vor Fehlsignalen schützende Wirkung der Schutzwand kann dadurch erzielt werden, dass diese den Flüssigkeitssensor nahezu allseitig, also etwa haubenartig umgibt, wobei vergleichsweise wenigstens ein kleiner, nämlich loch- oder schlitzartiger Durchbruch in der Schutzwand vorgesehen ist, der bei dem langsamen, typischen Anstieg des Flüssigkeitsspiegels aufgrund zunehmender Menge an abgeschiedener Flüssigkeit eine zuverlässige Kontaktierung zwischen der Flüssigkeit und dem Flüssigkeitssensor ermöglicht.

Die vergleichsweise schnellen Bewegungen, wie sie aufgrund von Fahrbahnunebenheiten oder kurzfristig bei einer hohen Kurvengeschwindigkeit auftreten, reichen jedoch nicht aus, um angesichts dieser kleinen Durchtrittsöffnung den Kontakt zwischen der Flüssigkeit und dem Sensor zu ermöglichen, so dass Fehlsignalisierungen des Sensors, wie sie kurzfristig durch den Fahrbetrieb verursacht werden könnten, mit großer Zuverlässigkeit vermieden werden.

Vorschlagsgemäß wird besonders vorteilhaft erreicht, dass eine elektronische Auswertung der Sensorsignale und eine entsprechende Anpassung der Motorsteuerung nicht erforderlich ist. Alternativ zu der vorgeschlagenen Abschirmung des Flüssigkeitssensors wäre eine geänderte Motorsteuerung denkbar, die beispielsweise die Sensorsignale mit einer gewissen Toleranzdauer bewertet: Sensorsignale, die nicht über einen vorbestimmten Zeitraum andauern, würden bei einer derartigen Motorsteuerung nicht zu einer Alarmierung bzw. einem Eingiff in die Kraftstoffförderung führen. Die vorschlagsgemäße Ausgestaltung des Fluidfilters ermöglicht demgegenüber auf einfache Weise auch bei vorhandenen Fahrzeugen eine Verbesserung des Ansprechverhaltens des Flüssigkeitssensors, indem die entsprechende Schutzwand nachgerüstet wird. Dies kann beispielsweise im Rahmen regelmäßiger Wartungsarbeiten erfolgen, wenn ohnehin an dem Fluidfilter gearbeitet wird.

Da die Durchbrüche zwischen diesen beiden Schutzwänden versetzt zueinander angeordnet sind, ergibt sich eine wirksame Sperre gegen einen kurzfristig lokal hohen, nämlich schwappenden Flüssigkeitsspiegel, während ein langsam ansteigender Flüssigkeitsspiegel, wie er durch die zunehmende abgeschiedene Flüssigkeitsmenge verursacht wird, problemlos durch die Durchbrüche bis an den Flüssigkeitssensor gelangen und zu der gewünschten Signalisierung des Sensors führen kann.

Vorteilhaft kann die Schutzwand an dem Filtereinsatz vorgesehen sein. Auf diese Weise ist der Flüssigkeitssensor nach Entnahme des Filtereinsatzes problemlos zugänglich, und die Handhabung eines Bauteils, welches die Schutzwand aufweist, wird dadurch besonders einfach, dass die Schutzwand gemeinsam mit dem Filtereinsatz handhabbar ist.

In besonders preisgünstiger und vorteilhafter Ausgestaltung kann in einem solchen Fall vorgesehen sein, dass die Schutzwand an einer Endscheibe vorgesehen ist, die der Filtereinsatz aufweist. So ist es aus der Praxis bekannt, das Filtermedium beispielsweise als ringförmig verlaufendes, gefaltetes Papierfiltermedium auszugestalten, wobei dieses Medium zwischen zwei Endscheiben gehalten ist.

Die Schutzwände können beispielsweise an eine der Endscheiben angeclipst sein. So kann preisgünstig eine vorhandener Filtereinsatz nachgerüstet werden, um den vorschlagsgemäßen Schutz des Flüssigkeitssensors zu ermöglichen. Eine nicht vollständig flüssigkeitsdichte Anlage des die Schutzwand aufweisenden Bauteils an dem Filtereinsatz ist insofern unkritisch, als sich ergebende Spalten im Sinne der vorbeschriebenen schmalen Durchbrüche den Zutritt von Flüssigkeit zu dem Flüssigkeitssensor ermöglichen können, oder die Verdrängung von einem anderen Fluid aus dem Raum, innerhalb dessen sich der Flüssigkeitssensor innerhalb der Schutzwand befindet, so dass bei langsam steigendem Flüssigkeitsstand sichergestellt ist, dass die Flüssigkeit an den Flüssigkeitssensor gelangen kann.

In wirtschaftlich besonders vorteilhafter Weise kann vorgesehen sein, die Schutzwand gemeinsam mit der Endscheibe des Filtereinsatzes als ein einziges Bauteil auszugestalten, so dass die Anzahl der herzustellenden, zu montierenden und zu handhabenden Bauteile wirtschaftlich vorteilhaft reduziert wird und auch der erforderliche Materialaufwand möglichst gering gehalten werden kann.

Vorteilhaft kann der Filtereinsatz einen Aufnahmeraum aufweisen, durch welchen sich ein Halter erstreckt, der den Flüssigkeitssensor trägt. Der Filtereinsatz kann beispielsweise, wie bereits erwähnt, einen etwa ringförmigen Querschnitt aufweisen, beispielsweise einen kreisringförmigen Querschnitt. Dabei kann radial außerhalb die Rohseite des Filters vorgesehen sein und das durch das Filtermedium hindurchgetretene, gereinigte Fluid kann im Inneren, also auf der Reinseite des Filters, zu einer zentralen Auslassöffnung abfließen. In diesem inneren Hohlraum auf der Reinseite des Filtereinsatzes kann der Halter vorgesehen sein, der den Flüssigkeitssensor trägt. Wenn der Filtereinsatz ringförmige Endscheiben aufweist, ist es problemlos möglich, den Halter durch den Filtereinsatz hindurch bis unterhalb des Filtereinsatzes verlaufen zu lassen, so dass der Flüssigkeitssensor als Wassersensor für das aus dem Kraftstoff abgeschiedene Wasser in einem Sammelraum angeordnet ist, der sich unterhalb des Filtereinsatzes befindet.

Vorteilhaft kann der Filter in an sich bekannter Weise mit einem Filtergehäuse ausgestaltet sein, in dem der Filtereinsatz angeordnet ist, wobei eine Entnahme und Auswechselbarkeit des Filtereinsatzes durch einen abnehmbaren Deckel ermöglicht ist, der an einem Ende des Filtergehäuses vorgesehen ist.

Vorzugsweise kann dieser Deckel am unteren Ende des Gehäuses vorgesehen sein, so dass sich der vorerwähnte Halter durch den Filtereinsatz nach unten in den Sammelraum erstreckt und der Filtereinsatz die vorerwähnte etwa haubenartige Schutzwand aufweisen kann, mit welcher er nach unten aus dem Filtergehäuse, und damit auch vom Flüssigkeitssensor, abgenommen werden kann. Auf diese Weise ist eine problemlose Zugänglichkeit während der Herstellung und Montage des Fluidfilters zu den einzelnen Bauteilen möglich, sowie später eine problemlose Wartung des Filters, indem bei geöffnetem Deckel der Filtereinsatz mitsamt der Schutzwand problemlos aus dem Filter entnommen werden kann. Der Flüssigkeitssensor kann derweil fest mit dem Filtergehäuse verbunden bleiben, so dass keine offenliegenden elektrischen Leitungen vorgesehen sind, die ggf. unbeabsichtigt zerstört werden könnten. Vielmehr können die elektrischen Zuleitungen zu dem Sensor geschützt verbaut sein und können an ihrem jeweiligen Einbauort während der gesamten Filterlebensdauer verbleiben, auch während der Wartungsarbeiten am Fluidfilter.

Vorteilhaft kann der Flüssigkeitssensor gemeinsam mit einem zweiten Sensor an einem gemeinsamen Halter angeordnet sein. Hierdurch wird die Anzahl der während der Montage des Fluidfilters zu handhabenden Teile verringert und es kann eine preisgünstige, platzsparende und störungsunanfällige elektrische Kontaktierung beider Sensoren an einer gemeinsamen Anschlussstelle vorgesehen werden.

Der zweite Sensor kann beispielsweise als Temperatursensor ausgestaltet sein, der bei Dieselkraftstoff die Kraftstofftemperatur misst und mit einer im Kraftstofffilter vorgesehenen Heizeinrichtung zusammenwirkt. Auf diese Weise kann der Kraftstofffilter vor einer Verblockung geschützt werden, wenn bei niedrigen Außentemperaturen der Dieselkraftstoff zu paraffinieren droht.

Der zweite Sensor, nämlich insbesondere der Temperatursensor, kann vorteilhaft vom Flüssigkeitssensor nach oben beabstandet am Halter angeordnet sein, so dass ein möglichst realistischer Temperaturwert innerhalb des Fluidfilters erfasst wird.

Ausführungsbeispiele der Erfindung werden anhand der rein schematischen Darstellungen nachfolgend näher erläutert. Dabei zeigt
- Fig. 1: einen Vertikalschnitt durch ein erstes Ausführungsbeispiel eines Fluidfilters,

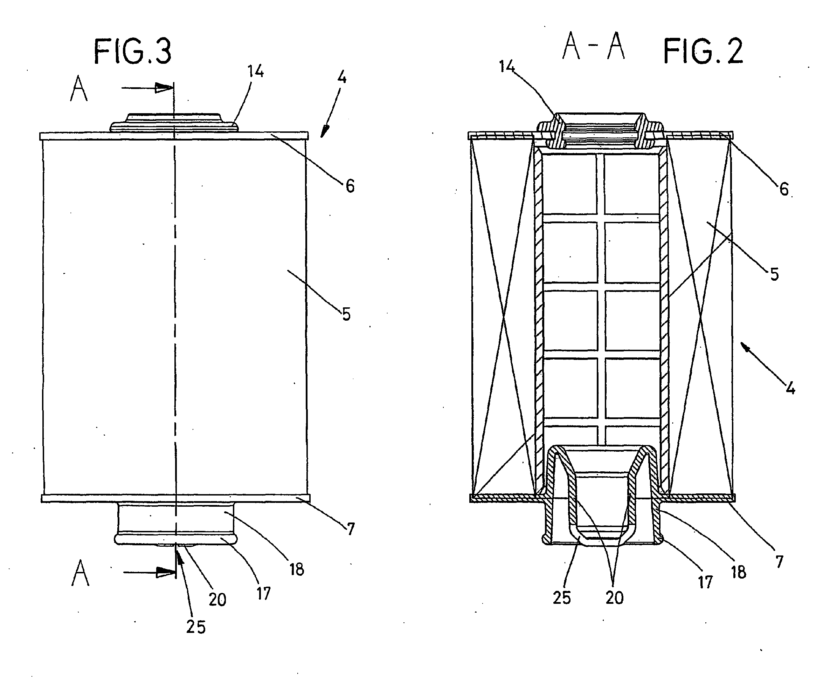

- Fig. 2: einen Vertikalschnitt durch den Filtereinsatz des Fluidfilters von Fig. 1,
- Fig. 3: eine Seitenansicht auf den Filtereinsatz von Fig. 2,

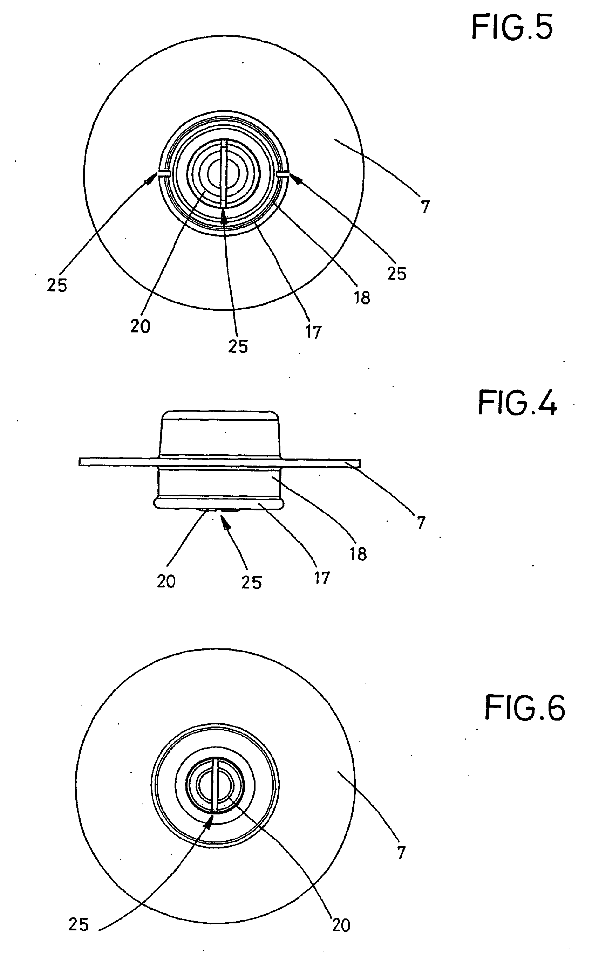

- Fig. 4: eine Seitenansicht auf die untere Endscheibe des Filtereinsatzes der Fig. 1 bis 3,
- Fig. 5: eine Ansicht von unten auf die Endscheibe der Fig. 4,
- Fig. 6: eine Ansicht von oben auf die Endscheibe der Fig. 4 und 5,

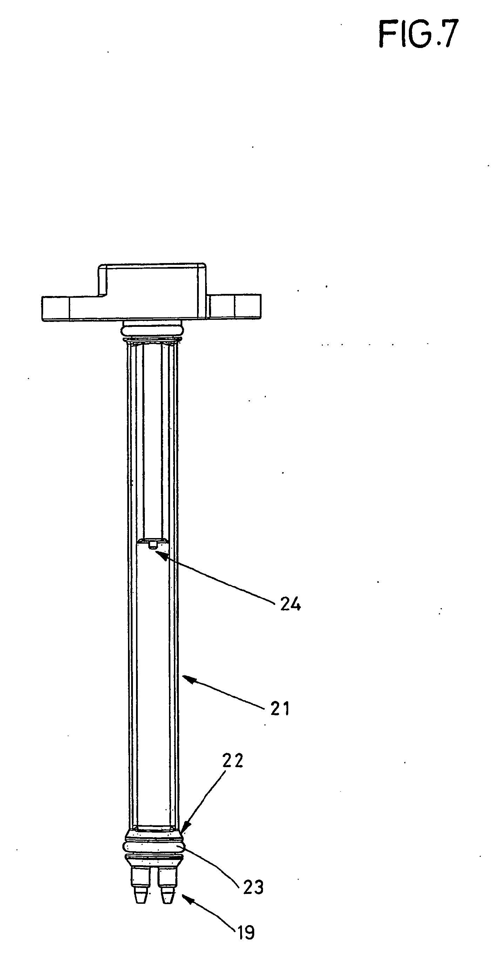

- Fig. 7: Seitenansicht auf einen Halter, der zwei Sensoren trägt, und
- Fig. 8: einen Vertikalschnitt durch ein zweites Ausführungsbeispiel eines Fluidfilters.

In den Zeichnungen ist mit 1 insgesamt ein Fluidfilter gekennzeichnet, der als Kraftstofffilter dient. Der Fluidfilter 1 weist ein Gehäuse 2 auf, welches an seinem unteren Ende mit einem abnehmbaren Deckel 3 verschlossen ist. Innerhalb des Gehäuses 2 befindet sich ein Filtereinsatz 4, der ein als Papierfaltenfilter ausgebildetes Filtermedium 5 aufweist. Dieses ist zwischen zwei ringförmigen Endscheiben 6 und 7 angeordnet und zwischen diesen gehalten.

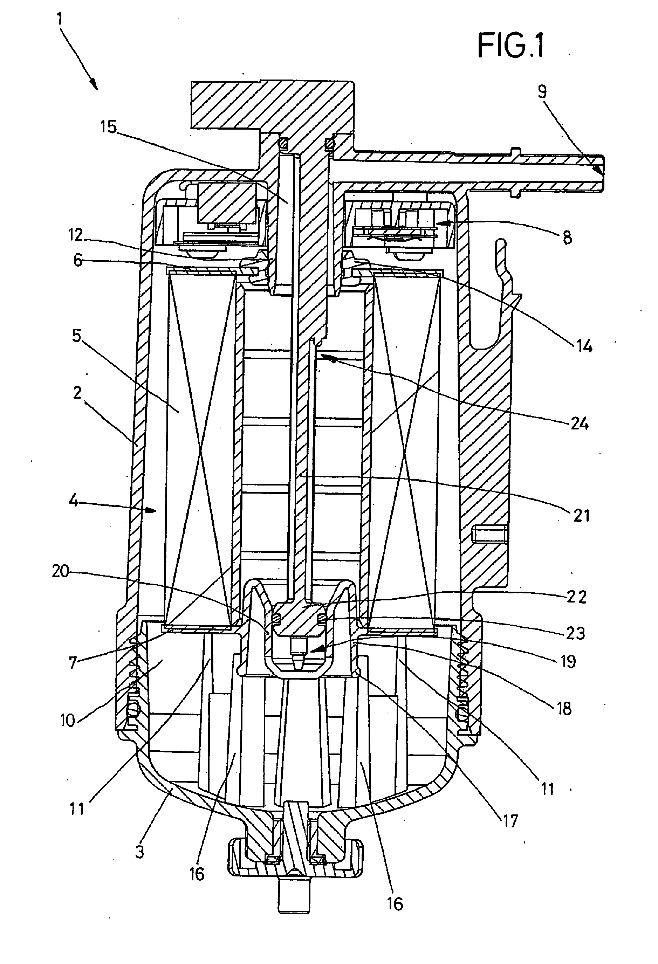

Im oberen Bereich des Gehäuses 2 ist eine Heizeinrichtung 8 angedeutet. Der Zutritt des ungefilterten Kraftstoffes erfolgt durch einen aus Fig. 1 nicht ersichtlichen Zufluss in den Innenraum des Gehäuses 2, so dass der ungefilterte Kraftstoff den Filtereinsatz 4 außen umgibt. Der Kraftstoff tritt durch das Filtermedium 5 hindurch und gelangt in den inneren, zentralen Hohlraum des Filtereinsatzes 4, steigt nach oben auf und verlässt den Fluidfilter 1 durch eine Auslassöffnung 9.

Wasser, welches sich innerhalb des Kraftstoffs befindet, wird durch das Filtermedium 5 abgeschieden. Aufgrund seiner höheren Dichte sammelt sich das Wasser im unteren Bereich des Fluidfilters 1. Dort bildet der Deckel 3 einen Sammelraum 10 für das abgeschiedene Wasser. Der Deckel 3 weist Stützen 11 auf, welche in das Innere des Gehäuses 2 gegen die untere Endscheibe 7 ragen und damit den gesamten Filtereinsatz 4 an seiner vorbestimmten Stelle halten, so dass der Filtereinsatz 4 nicht von einem zentralen Stutzen 12 rutscht, dem der Filtereinsatz 4 mit einer umlaufenden Dichtung 14 anliegt und der einen Auslasskanal 15 aufweist, welcher zu der Auslassöffnung 9 führt.

Außer den Stützen 11 sind im Deckel 3 Rasthaken 16 vorgesehen, die in das Innere des Gehäuses 2 weisen und eine umlaufende Wulst 17 hintergreifen, die an einem Vorsprung der unteren Endscheibe 7 vorgesehen ist. Auf diese Weise ist bei Abnahme des Deckels 3 vom Gehäuse 2 gewährleistet, dass zusammen mit dem Deckel 3 auch der Filtereinsatz 4 aus dem Gehäuse 2 entnommen wird, so dass eine Handhabung des Filtereinsatzes 4 für das Wartungspersonal möglich ist, ohne den verschmutzten Filtereinsatz 4 selbst anfassen zu müssen.

Die Wulst 17 ist als umlaufender Rand einer äußeren Schutzwand 18 ausgestaltet, welche von der unteren Endscheibe 7 materialeinheitlich ausgebildet wird und welche einen Flüssigkeitssensor 19 umgibt. Die äußere Schutzwand 18 umgibt dabei mit einem Abstand eine radial weiter innen angeordnete Schutzwand 20, die nicht nur seitlich neben dem Flüssigkeitssensor 19 herum verläuft, sondern diesen auch unten umgibt, also etwa haubenartig um den gesamten Flüssigkeitssensor 19 herum verläuft.

Der Flüssigkeitssensor 19 ist am unteren Ende eines Halters 21 befestigt, der oberhalb des Flüssigkeitssensors 19 einen Dichtkopf 22 mit einer umlaufenden O-Ring-Dichtung 23 aufweist und somit die Reinseite, also den zentralen Innenraum, des Filtereinsatzes 4 nach unten hin abdichtet.

Weiter oben ist am Halter 21 ein Temperatursensor 24 vorgesehen, so dass der Halter 21 eine preisgünstige und betriebssichere Anordnung der beiden Sensoren 19 und 24 ermöglicht, mit fest im Halter 21 verlaufenden elektrischen Zuleitungen zu den Sensoren. An seinem oberen Ende weist der Halter 21 eine elektrische Anschlusstelle auf, über welche die Sensoren mit einer Motorsteuerung verbunden sind, die z. B. die Beheizung des Fluidfilters 1 steuert sowie Warn- oder Schutzmaßnahmen auslöst, wenn der Flüssigkeitssensor 19 einen hohen Wasserstand im Sammelraum 10 signalisiert.

Die untere Endscheibe 7 des Filtereinsatzes 4 bildet materialeinheitlich die beiden Schutzwände 18 und 20 aus. Während die äußere Schutzwand lediglich als zylindrische Wand ausgestaltet ist, ist die innere Schutzwand 20 auch nach unten geschlossen, wobei beide Schutzwände 18 und 20 schmale schlitzförmige Durchbrüche 25 aufweisen. Die Durchbrüche 25 der beiden Schutzwände 18 und 20 verlaufen um 90 Grad zueinander versetzt, um Fehlsignalisierungen des Flüssigkeitssensors, die durch eine schwappende Wasseroberfläche im Sammelraum 10 ausgelöst werden könnten, möglichst unwahrscheinlich zu machen.

Die Durchbrüche 25 in der äußeren Schutzwand 18 dienen dazu, ein Fluidpolster zu vermeiden, welches sich ansonsten zwischen den beiden Schutzwänden 18 und 20 ausbilden könnte und den Kontakt der vom Flüssigkeitssensor 19 zu registrierenden Flüssigkeit, hier also Wasser, mit dem Flüssigkeitssensor 19 verhindern könnte. Der einzige, schlitzartig durchgehende Durchbruch 25 in der inneren, haubenartigen Schutzwand 20 ermöglicht den Eintritt eines langsam ansteigenden Flüssigkeitsspiegels in das Innere dieser Schutzwand 20 und damit den Kontakt der Flüssigkeit mit dem Flüssigkeitssensor 19, so dass bei entsprechend hohem Füllstand an Wasser innerhalb des Sammelraums 10 zuverlässig der Flüssigkeitssensor 19 ansprechen kann. Fehlsignalisierungen aufgrund eines hin- und herschwappenden Flüssigkeitsspiegels bei einem insgesamt noch unkritisch niedrigen Flüssigkeitsstand innerhalb des Sammelraums 10 werden durch die beiden Schutzwände 18 und 20 hingegen vermieden.

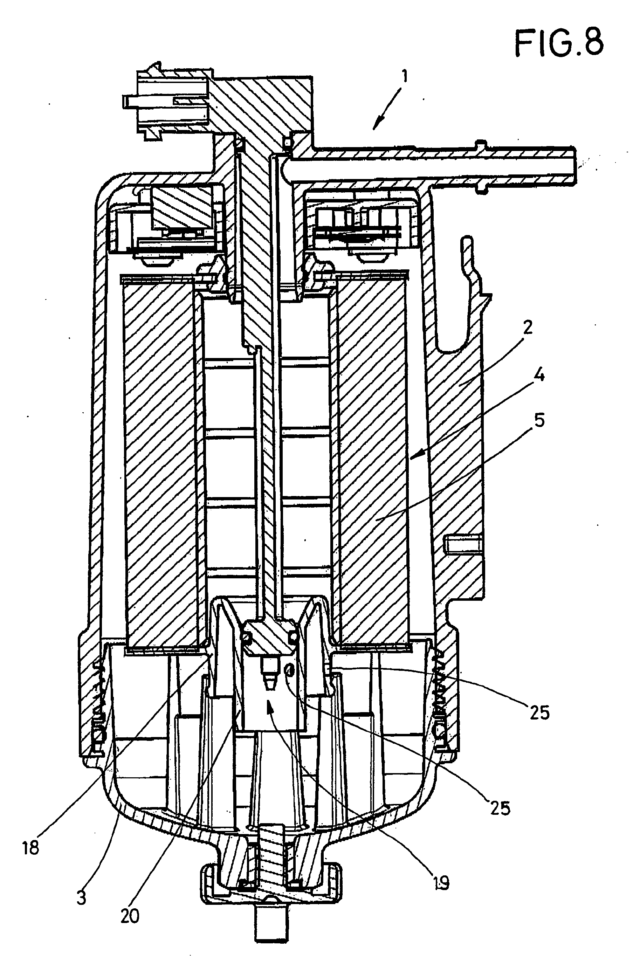

Fig. 8 zeigt ein zweites Ausführungsbeispiel der Erfindung. Bauteile, die mit denen des ersten Ausführungsbeispiel gleich oder vergleichbar sind, sind mit den selben Bezugsziffern gekennzeichnet wie bei dem ersten Ausführungsbeispiel. Der Aufbau - des Fluidfilters 1 entspricht im wesentlichen dem des ersten Ausführungsbeispiels. Die Durchbrüche 25 in der äußeren Schutzwand 18 und in der inneren Schutzwand 20 sind jedoch nicht als Schlitze, sondern als Bohrungen ausgestaltet. Fig. 8 zeigt, dass auch die Durchbrüche 25 dieses Ausführungsbeispiels versetzt zueinander angeordnet sind. Der geringere freie Querschnitt dieser Durchbrüche 25 ermöglicht eine besonders starke Beruhigung des Wasserspiegels um den Flüssigkeitssensor 19 herum. Da die Durchbrüche 25 oberhalb des Flüssigkeitssensors 19 angeordnet sind, kann ein langsam ansteigender Wasserspiegel problemlos den leichteren Kraftsttoff verdrängen, so dass das Wasser bis an den Flüssigkeitssensor 19 gelangt.

## Patentansprüche

1. Fluidfilter (1),
■ mit einem Sammelraum (10) für eine aus dem Fluid abgeschiedene Flüssigkeit,
■ sowie einem Filtereinsatz (4), der ein für das Fluid durchlässiges Filtermedium (5) aufweist,
wobei der Sammelraum (10) unterhalb des Filtermediums (5) angeordnet ist,
■ und einem Flüssigkeitssensor (19), der oberhalb der tiefsten Stelle des Sammelraums (10) angeordnet ist, wobei
■ der Flüssigkeitssensor (19) zumindest bereichsweise mittels wenigstens einer Schutzwand (18, 20) gegenüber der Flüssigkeit abgeschirmt ist,
■ die Schutzwand (18, 20) seitlich, oder seitlich und unterhalb des Flüssigkeitssensors (19) verläuft,
■ eine flüssigkeitsdurchlässige Verbindung vom Sammelraum (10) bis zu dem Flüssigkeitssensor (19) besteht
■ die flüssigkeitsdurchlässige Verbindung eine radiale Strömung des Fluids von dem die Schutzwand (18, 20) umgebenden Sammelraum (10) zum Flüssigkeitssensor (19) ermöglicht,
■ der Flüssigkeitssensor (19) in radialer Richtung durch wenigstens zwei Schutzwände (18, 20) vom Sammelraum (10) getrennt ist,
■ in der radial inneren, dem Flüssigkeitssensor (19) nächsten Schutzwand (20) ein Durchbruch (25) auf Höhe des Flüssigkeitssensors (19) oder höher vorgesehen ist,
■ in der wenigstens einen radial weiter außen angeordneten Schutzwand (18) ein Durchbruch (25) auf der gleichen Höhe oder höher vorgesehen ist,
■ die Durchbrüche klein, nämlich loch- oder schlitzartig ausgestaltet sind,
wobei
■ die Durchbrüche (25) in den wenigstens zwei Schutzwänden (18, 20) in der Art versetzt zueinander angeordnet sind, dass die flüssigkeitsdurchlässige Verbindung labyrinthartig eine mehrfache Richtungsänderung des durch diese Verbindung in radialer Hauptrichung zu dem Flüssigkeitssensor (19) strömenden Fluids bewirkend verläuft.

2. Fluidfilter nach Anspruch 1, **dadurch gekennzeichnet, dass** die Schutzwände (18, 20) an dem Filtereinsatz (4) vorgesehen sind,
das Filtermedium (5) zwischen zwei Endscheiben (6, 7) angeordnet ist,
und die die Schutzwände (18, 20) gemeinsam mit der Endscheibe (7) ein Bauteil bilden.

3. Fluidfilter nach Anspruch 1 oder 2, **dadurch gekennzeichnet, dass** der Filtereinsatz (4) einen Aufnahmeraum aufweist, durch welchen sich ein den Flüssigkeitssensor (19) tragender Halter (21) erstreckt.

4. Fluidfilter nach einem der vorhergehenden Ansprüche, **gekennzeichnet durch** ein den Filtereinsatz (4) aufnehmendes Gehäuse (2), welches an seinem unteren Ende mittels eines abnehmbaren Deckels (3) verschlossen ist,
wobei der Filtereinsatz (4) bei geöffnetem Deckel (3) nach unten aus dem Gehäuse (2) entnehmbar ist,
und der Flüssigkeitssensor (19) im Gehäuse (2) hängend befestigt ist.

5. Fluidfilter nach einem der vorhergehenden Ansprüche, **dadurch gekennzeichnet, dass** der Flüssigkeitssensor (19) gemeinsam mit einem zweiten Sensor an einem Halter (21) angeordnet ist.

6. Fluidfilter nach Anspruch 5, **dadurch gekennzeichnet, dass** der zweite Sensor ein Temperatursensor (24) ist.

7. Fluidfilter nach Anspruch 5 oder 6, **dadurch gekennzeichnet, dass** der zweite Sensor von dem Flüssigkeitssensor (19) nach oben beabstandet am Halter (21) angeordnet ist.

8. Fluidfilter nach einem der vorhergehenden Ansprüche, **dadurch gekennzeichnet, dass** der Fluidfilter (1) als Kraftstofffilter ausgestaltet ist, wobei das Filtermedium (5) als Wasserabscheider für Wasser undurchdringlich ausgestaltet ist.

9. Filtereinsatz (4) eines Fluidfilters (1) nach Anspruch 2.

## Claims

1. Fluid filter (1),
- with a collecting chamber (10) for a liquid precipitated out of the fluid, a filter element (4) with a filter medium (5) which is permeable for the fluid, where the collecting chamber (10) is arranged beneath the filter medium (5),
- and a liquid sensor (19) which is arranged above the lowest point of the collecting chamber (10), where
- the liquid sensor (19) is screened from the liquid at least in places by at least one protecting wall (18, 20),
- the protecting wall (18, 20) runs at the side of or at the side of and beneath the liquid sensor (19),
- there is a connection which is permeable to the liquid from the collecting chamber (10) to the liquid sensor (19),
- the liquid-permeable connection permits a radial flow of the fluid from the collecting chamber (10) surrounding the protecting wall (18, 20) to the liquid sensor (19),
- the liquid sensor (19) is separated from the collecting chamber (10) in the radial direction by at least two protecting walls (18, 20),
- an opening (25) is provided at the level of the liquid sensor (19) or higher in the radially inward protecting wall (20) closest to the liquid sensor (19),
- an opening (25) is provided at the same height or higher in the at least one protecting wall (18) which is arranged radially further out wards,
- the openings are small in size i.e. in the form of either holes or slots, where
- the openings (25) in the at least two protecting walls (18, 20) are off set in relation to one another in such a way that the liquid-permeable connection is formed like a labyrinth and causes the fluid flowing through this connection in the main radial direction to the liquid sensor (19) to change direction several times.

2. Fluid filter according to claim 1 **characterised in that** the protecting walls (18, 20) are provided on the filter element (4),
the filter medium (5) is arranged between two end plates (6, 7),
and the protecting walls (18, 20) form a component along with the end plate (7).

3. Fluid filter according to claim 1 or claim 2 **characterised in that** the filter element (4) has a seating space through which a retainer (21) supporting the liquid sensor (19) extends.

4. Fluid filter according to any of the above claims **characterised by** a housing (2) holding the filter element (4) which is closed at its lower end by a removable cover (3),
where the filter element (4) can be removed downwards out of the housing (2) when the cover (3) is opened,
and the liquid sensor (19) is attached suspended in the housing (2).

5. Fluid filter according to any of the above claims **characterised in that** the liquid sensor (19) is arranged on a retainer (21) along with a second sensor.

6. Fluid filter according to claim 5 **characterised in that** the second sensor is a temperature sensor (24).

7. Fluid filter according to claim 5 or claim 6 **characterised in that** the second sensor is arranged on the retainer (21) at a distance above the liquid sensor (19).

8. Fluid filter according to any of the above claims **characterised in that** the fluid filter (1) is formed as a fuel filter, where the filter medium (5) is formed as a water precipitator impervious to water.

9. Filter element (4) of a fluid filter (1) according to claim 2.

## Revendications

1. Filtre à fluide (1),
• avec une chambre (10) destinée à accumuler un liquide qui a été sé paré du fluide,
• ainsi qu'avec un insert filtrant (4) qui présente un média filtrant (5) perméable au fluide, sachant que la chambre d'accumulation (10) est agencée en dessous du média filtrant (5),
• et avec un capteur de liquide (19) agencé au dessus du point le plus bas de la chambre d'accumulation (10), sachant que
• le capteur de liquide (19) est, au moins localement, protégé par rapport au liquide au moyen d'au moins une paroi protectrice (18, 20),
• la paroi protectrice (18, 20) s'étend latéralement, ou latéralement et en dessous du capteur de liquide (19),
• une liaison perméable au liquide va de la chambre d'accumulation (10) au capteur de liquide (19),
• la liaison perméable au liquide permet un écoulement radial du fluide, à savoir de la chambre d'accumulation (10) entourant la paroi protectrice (18, 20) au capteur de liquide (19),
• dans le sens radial, le capteur de liquide (19) est séparé de la chambre d'accumulation (10) par au moins deux parois protectrices (18, 20),
• dans la paroi protectrice (20) radiale intérieure la plus proche du capteur de liquide (19), un orifice de passage (25) a été prévu à la hauteur du capteur de liquide (19) ou plus haut,
• dans au moins une paroi de protection (18) agencée radialement plus loin à l'extérieur, un trou de passage (25) a été prévu à la même hauteur ou plus haut,
• les orifices de passage sont configurés de petite taille, à savoir sous forme de trou ou de fente, sachant que
• les orifices de passage (25) sont agencés dans au moins les deux parois de protection (18, 20), décalés réciproquement d'une façon telle que la liaison perméable au liquide présente un tracé de type labyrinthique faisant que le fluide qui s'écoule par cette liaison en direction principalement radiale vers le capteur de liquide (19) change plusieurs fois de direction.

2. Filtre à fluide selon la revendication 1, **caractérisé en ce que** les parois protectrices (18, 20) sont prévues contre l'insert (4) de filtre, le média filtrant (5) est agencé entre deux disques terminaux (6, 7), et **en ce que** les parois protectrices (18, 20) forment ensemble, avec le disque terminal (7), un composant.

3. Filtre à fluide selon la revendication 1 ou 2, **caractérisé en ce que** l'insert filtrant (4) présente une chambre réceptacle à travers laquelle s'étend un support (21) portant le capteur de liquide (19).

4. Filtre à fluide selon l'une des revendications précédentes, **caractérisé par** un carter (2) recevant l'insert filtrant (4), carter qui est obturé en son extrémité inférieure au moyen d'un couvercle (3) amovible, sachant que l'insert filtrant (4) peut, couvercle ouvert (3), être extrait du carter (2) par le bas, et que le capteur de liquide (19) est fixé suspendu dans le carter (2).

5. Filtre à fluide selon l'une des revendications précédentes, **caractérisé en ce que** le capteur de liquide (19) est agencé conjointement à un deuxime capteur contre un support (21).

6. Filtre à fluide selon la revendication 5, **caractérisé en ce que** le deuxime capteur est un capteur de température (24).

7. Filtre à fluide selon la revendication 5 ou 6, **caractérisé en ce que** le deuxième capteur est agencé contre le support (21), à une certaine distance au dessus du capteur de liquide (19).

8. Filtre à fluide selon l'une des revendications précédentes, **caractérisé en ce que** le filtre à fluide (1) est configuré en filtre à carburant, sachant que le média filtrant (5) est, en tant que séparateur d'eau, configuré imperméable à l'eau.

9. Insert filtrant (4) d'un filtre à fluide (1) selon la revendication 2.
